# EUROPÄISCHE PATENTSCHRIFT

(11) **EP 3 142 819 B1**
(45) Veröffentlichungstag und Bekanntmachung des Hinweises auf die Patenterteilung: **14.03.2018**
(21) Anmeldenummer: 15721572.4
(22) Anmeldetag: 29.04.2015
(51) Int. Cl.: B23B 41/12, B23D 13/00, B23P 9/00

(54) **WERKZEUG ZUM AUFRAUEN EINER METALLISCHEN OBERFLÄCHE UND VERFAHREN ZUM AUFRAUEN EINER METTALISCHEN OBERFLÄCHE MIT EINEM SOLCHEN AUFRAUWERKZEUG**
TOOL FOR ROUGHENING A METALLIC SURFACE AND METHOD FOR ROUGHENING A METALLIC SURFACE WITH SUCH A ROUGHENING TOOL
OUTIL PERMETTANT DE RENDRE UNE SURFACE MÉTALLIQUE RUGUEUSE ET PROCÉDÉ POUR RENDRE UNE SURFACE MÉTALLIQUE RUGUEUSE AVEC UN TEL OUTIL

(30) Priorität: 13.05.2014 DE 102014006845
(43) Veröffentlichungstag der Anmeldung: 22.03.2017
(73) Patentinhaber: Audi AG, 85045 Ingolstadt (DE)
(72) Erfinder: KOPTON, Peter, 85092 Kösching (DE)
(74) Vertreter: Eickmeyer, Dietmar
(86) Internationale Anmeldenummer: PCT/EP2015/000873
(87) Internationale Veröffentlichungsnummer: WO 2015/172864

(56) Entgegenhaltungen:
- DE-A1-102011 001 772
- DE-A1-102012 105 183
- DE-A1-102013 108 604
- JP-A- 2006 097 045

## Beschreibung

Die Erfindung betrifft ein Aufrauwerkzeug zum Aufrauen einer metallischen Oberfläche einer Innenwandung einer vorgebohrten Werkstück-Kernbohrung nach dem Oberbegriff des Patentanspruches 1 sowie ein Verfahren zum Aufrauen einer solchen Oberfläche. Ein solches Aufrauwerkzeug wird im Fahrzeugbau zum Beispiel bei der Herstellung einer Zylinderkopf-Bohrung einer Leichtmetall-Brennkraftmaschine aus Aluminium- oder Magnesium-Legierungen verwendet. Um die Verschleißfestigkeit der Al/Mg-Zylinderlaufflächen einer solchen Brennkraftmaschine zu erhöhen, kann in einem thermischen Spritzverfahren eine verschleißfeste Beschichtung auf die Zylinderlaufflächen aufgebracht werden.

Zur Verbesserung der Haftfestigkeit kann vor dem Applizieren der verschleißfesten Beschichtung die Metalloberfläche unter Bildung einer Aufraustruktur mit mikroskopisch kleinen Hinterschneidungen aufgeraut werden. Das Aufrauen kann beispielhaft chemisch oder durch Laserbearbeitung erfolgen. Alternativ kann auch ein mechanisches Aufrauen erfolgen, wie es beispielhaft aus der DE 10 2009 006 694 A1 oder aus der DE 10 2008 024 313 A1 bekannt ist. Bei einem solchen gattungsgemäßen mechanischen Aufrauen wird ein Aufrauwerkzeug eingesetzt, das am Außenumfang eine Profilierkontur aufweist, mit der Werkzeugrotation unter spanender oder spanfreier Umformung der metallischen Oberfläche eine vordefinierte Aufraustruktur erzeugbar ist. So wird in der DE 10 2008 024 313 A1 die Aufraustruktur in zwei Arbeitsschritten bereitgestellt, und zwar zunächst in einem ersten Schritt, bei dem Hinterschnitte spanend und/oder prägend in die metallische Oberfläche eingebracht werden, und einem zweiten Verfahrensschritt, bei dem die Vorformen zum Beispiel durch Stauchung in einem nicht spanenden Verfahrensschritt weiter verformt werden. DE 10 2013 108 604 A1 offenbart ein Aufrauwerkzeug mit den Merkmalen des Oberbegriffes des Patentanspruches 1. Die aus dem Stand der Technik bekannten Aufrauwerkzeuge sowie die damit durchführbaren Aufrauverfahren sind fertigungstechnisch aufwendig sowie mit hohen Werkzeugkosten und hohen Bearbeitungszeitdauern beim Aufrauen verbunden.

Die Aufgabe der Erfindung besteht darin, ein Aufrauwerkzeug zum Aufrauen einer metallischen Oberfläche einer Innenwandung einer vorgebohrten Werkstück-Kernbohrung bereitzustellen, dass bei reduziertem Energieaufwand und/oder Zeitaufwand eine qualitativ hochwertige Aufraustruktur an der Innenwandung der Werkstück-Kernbohrung erzeugt.

Die Aufgabe ist durch die Merkmale des Patentanspruches 1 oder des Patentanspruches 13 gelöst. Bevorzugte Weiterbildungen der Erfindung sind in den Unteransprüchen offenbart.

Die Erfindung beruht auf der Problematik, dass mit dem aus dem Stand der Technik bekannten Aufrauwerkzeug die Erzeugung der Aufraustruktur an der Kernbohrungs-Innenwandung zeit- und energieaufwendig ist. Vor diesem Hintergrund ist gemäß dem kennzeichnenden Teil des Patentanspruches 1 das Aufrauwerkzeug mit zumindest einem Profiliersteg versehen, der sich längs der Werkzeugachse erstreckt und von einem Werkzeuggrundkörper radial nach außen abragt. Die Profilierkontur zur Erzeugung der Aufraustruktur ist an dessen außenumfangsseitigen Stegrücken ausgebildet. Zudem weist der Profiliersteg an der Werkzeugspitze des Aufrauwerkzeuges eine Nutschneide auf. Die Nutschneide ist quer zur Werkzeugachse ausgerichtet und unmittelbar an der Werkzeugspitze angeordnet.

Mit einem solchen Aufrauwerkzeug kann die Aufraustruktur in zwei Bearbeitungsschritten erzeugt werden: In einem ersten Vorbearbeitungsschritt wird zunächst mittels der Nutschneide des Profilierstegs eine längs der Kernbohrungsachse verlaufende Profiliernut in die Kernbohrungs-Innenwandung geschnitten. Die Ausbildung der Profiliernut in der Kernbohrungs-Innenwandung erfolgt beispielhaft durch eine Axialhubbewegung des Bohrwerkzeuges in die Kernbohrung hinein. Alternativ dazu kann die Profiliernut auch spiralförmig ausgebildet sein. In diesem Fall wird das Aufrauwerkzeug in einem "Gewindebohrmodus" mit geringer Drehzahl in die Kernbohrung eingefahren. In diesem Fall erstreckt sich der Profiliersteg nicht geradlinig längs der Werkzeugachse, sondern verläuft dieser vielmehr mit einem Drallwinkel spiralförmig um die Werkzeugachse. Die Drehzahl ist dabei dem Drallwinkel des Profilierstegs angepasst. Nach erfolgtem ersten Vorbearbeitungsschritt, das heißt im, in die Kernbohrung eingefahrenen Zustand, ist der Profiliersteg in Nuteingriff mit der Profiliernut, das heißt über die gesamte Bearbeitungslänge (Profilierungslänge) in der Profiliernut angeordnet.

In einem anschließenden zweiten Profilierungsschritt kann dann die Profilierkontur des Aufrauwerkzeugs unter Werkzeugrotation die metallische Oberfläche der Innenwandung der Kernbohrung aufrauen. Für den Endbearbeitungsschritt ist keine hohe Drehzahl erforderlich, sondern aufgrund des fehlenden bzw. zumindest stark reduzierten Axialvorschubs lediglich eine reduzierte Drehzahl. Bei zum Beispiel zwei mit Bezug auf die Werkzeugachse diametral gegenüberliegenden punktsymmetrisch ausgeführten Profilierstegen ist lediglich zumindest eine halbe Umdrehung des Aufrauwerkzeuges erforderlich. Anschließend kann das Aufrauwerkzeug aus der oberflächenbearbeitenden Kernbohrung herausgeführt werden. Auf diese Weise erfolgt der Aufrauprozess wesentlich energieeffizienter sowie mit stark reduziertem Zeitaufwand.

Es ist hervorzuheben, dass sowohl der Vorbearbeitungsschritt als auch der Profilierschritt ohne Werkzeugwechsel, das heißt durch ein einziges Aufrauwerkzeug erfolgt. Der zumindest eine Profiliersteg sowie der später beschriebene, zumindest eine Aufbohrsteg kann materialeinheitlich und/oder einstückig am Werkzeuggrundkörper angeformt sein. Alternativ dazu können die Profilier- und Aufbohrstege auch an separaten Umformplatten ausgebildet sein, die am Werkzeuggrundkörper lösbar befestigt sind.

Wie oben erwähnt, ist im Vorbearbeitungsmodus die zumindest eine spiralförmige Profiliernut in der Kernbohrungs-Innenwandung in einem "Gewindebohrmodus" erzeugt werden. Das heißt, dass bei der Erzeugung der spiralförmigen Profiliernut das Aufrauwerkzeug sowohl mit axial Vorschubgeschwindigkeit als auch unter langsamer Rotation um seine Werkzeugachse (das heißt abhängig von der Nutsteigung) in die zylindrische Kernbohrung bewegt wird, und zwar so, dass sich ein durchgehender Nut-Gang ergibt und der Profiliersteg in Eingriff mit der erzeugten Profiliernut ist.

Nachfolgend wird die Werkzeuggeometrie des Aufrauwerkzeugs beschrieben: Die Nutschneide des Profilierstegs kann eine Nutgrund-Schneidkante aufweisen, die an einer ersten Schneidenecke mit der Haupt-Schneidkante zusammenläuft. Zudem kann der Profiliersteg im Bereich der Werkzeugspitze eine außenumfangsseitige Freifläche aufweisen, die an der Nutgrund-Schneidkante mit einer Nut-Spanfläche zusammenläuft. Die Nut-Spanfläche drückt den während des Vorbearbeitungsschrittes entstehenden Nutspan in den, längs der Werkzeugachse verlaufenden nutenförmigen Spanraum und wird von dort weiter in Richtung aus der Kernbohrung geführt.

Die oben genannte Nut-Spanfläche ist sowohl durch die Nut-Schneidkante als auch durch erste und zweite Nutflanken-Schneidkanten begrenzt. Diese gehen jeweils an der ersten Schneidenecke und an einer zweiten Schneidenecke in die Nutgrund-Schneidkante über. An der ersten Schneidenecke laufen somit insgesamt eine Profilier-Schneidkante, die erste Nutflanken-Schneidkante sowie die Nutgrund-Schneidkante zusammen.

Wie bereits oben angedeutet, ist es im Hinblick auf reduzierte mechanische Belastungen des Bohrwerkzeuges bevorzugt, wenn die Profiliernut im Vorbearbeitungsschritt nicht geradlinig, sondern spiralförmig in die Kernbohrungs-Innenwandung eingebracht wird. Entsprechend verläuft der Profiliersteg mit einem Drallwinkel spiralförmig um die Werkzeugachse. In diesem Fall wird die Profilnut sowohl mit der translatorischen Hubbewegung, als auch mit einer, dem Drallwinkel angepassten Rotationsbewegung des Aufrauwerkzeuges spiralförmig in die Kernbohrungs-Innenwandung eingeschnitten (das heißt im Gewindebohrmodus).

Für ein einwandfreies Abtragen des Nutspans ist es bevorzugt, wenn die Nut-Schneidkante mit Bezug auf eine zur Werkzeugachse rechtwinklige Ebene mit einem vorgegebenen Anstellwinkel schräggestellt ist. Der Anstellwinkel ist bevorzugt so bemessen, dass in der Rotationsrichtung betrachtet, die vorauseilende erste Schneidenecke um einen Axialversatz von der Werkzeugspitze beabstandet ist. Die oben genannte zweite Schneidenecke kann bevorzugt in etwa flächenbündig an der gegebenenfalls flachen Werkzeugspitze abschließen.

Im Hinblick auf einen einwandfreien Betrieb ist es von Relevanz, dass der während des Vorbearbeitungsschrittes anfallende Nutspan zuverlässig aus der Kernbohrung abgeführt wird. Für eine solche zuverlässige Nutspan-Abführung kann die Nut-Spanfläche der Nutschneide radial nach Innen mit einer Spanleitfläche verlängert sein. Über die Spanleitfläche kann der beim Nutschneiden entstehende Nutspan leichtgängig in den längs der Werkzeugachse verlaufenden Spanraum gedrückt werden. In einer konstruktiven Ausführung kann die, die Nut-Spanfläche radial nach Innen verlängernde Spanleitfläche durch eine Eckausnehmung am Übergang zwischen der Werkzeugspitze und dem Spanraum gebildet sein.

Bevorzugt kann der Profiliersteg im Bereich der Nutschneide an der Werkzeugspitze eine Stegtiefe aufweisen, die größer als die Stegtiefe/Profilhöhe der Profilierkontur ist. Das heißt, dass der Werkzeugdurchmesser an der Nutschneide größer ist als der Werkzeugdurchmesser an der Profilkontur. Auf diese Weise ist gewährleistet, dass im Vorbearbeitungsschritt die der Nutschneide in Einführrichtung nacheilende Profilierkontur belastungsfrei in die Profiliernut einfahrbar ist.

Die Werkstück-Kernbohrung kann zunächst mittels eines separaten Bohrwerkzeuges toleranzbehaftet vorgebohrt werden. Vor Durchführung des Aufrauprozesses kann anschließend die Kernbohrung auf einen Enddurchmesser aufgebohrt werden. In einer besonderen Ausführungsvariante kann der Aufbohrvorgang nicht in einem separaten Prozessschritt durchgeführt werden, sondern gleichzeitig mit dem Aufrauvorgang. Hierzu kann zusätzlich zu dem zumindest einen Profiliersteg zumindest eine Aufbohr-Schneide bereitgestellt sein, die sich entlang der Werkzeugachse erstreckt und vom Werkzeuggrundkörper radial nach außen abragt. Die Aufbohr-Schneide kann einen Aufbohrsteg aufweisen, der eine, einen nutenförmigen Spanraum zugewandte Spanfläche und eine außenumfangsseitige Freifläche aufweist, die an einer sich entlang der Werkzeugachse erstreckenden Aufbohr-Schneidkante zusammenlaufen. In diesem Fall erfolgt im Profilierschritt sowohl das Aufrauen der Innenwandung als auch zeitgleich das Aufbohren bis auf den Enddurchmesser.

Bevorzugt ist die Steghöhe des Aufbohrstegs geringer als die Profilkonturhöhe, jedoch noch groß genug, um in der Werkstück-Vorbohrung einen Materialabtrag bis auf einen Bohrungs-Enddurchmesser zu gewährleisten. Das heißt, dass der Werkzeugdurchmesser am Aufbohrsteg kleiner ist als der Werkzeugdurchmesser an der Profilierkontur. Im oben erwähnten Vorbearbeitungsschritt (das heißt beim Einfahren in der Axialrichtung) wird daher nicht nur mittels des Profilierstegs eine Profiliernut, sondern zusätzlich auch mittels des Aufbohrstegs eine Aufbohrnut in der Kernbohrungs-Innenwandung erzeugt. Die Nuttiefe der Aufbohrnut ist dabei kleiner als die Nuttiefe der Profiliernut.

Im nachfolgenden Endbearbeitungsschritt wird die Kernbohrung unter Werkzeugrotation bis auf den Enddurchmesser aufgebohrt. Die beim Vorbearbeitungsschritt in die Kernbohrungs-Innenwandung eingebrachte Aufbohrnut weist eine Nuttiefe auf, die der im anschließenden Endbearbeitungsschritt abzutragenden Materialstärke entspricht. Demgegenüber liegt der Nutgrund der beim Vorbearbeitungsschritt eingebrachten Profiliernut auf einem größeren Durchmesser als die beim Aufbohren abzutragende Materialstärke. In diesem Fall verbleibt im Fertigungszustand lediglich die Profiliernut und die Aufraustruktur an der Kernbohrungs-Innenwandung, während die Aufbohrnut verschwunden ist. Zudem wird bei der Werkzeugrotation im Endbearbeitungsschritt im Inneren der Werkstück-Bohrung durch die rotierende Nutschneide eine ringförmig umlaufende Ringnut erzeugt. Sowohl die Ringnut als auch die Profiliernut können, je nach Verwendungszweck des Werkstückes, zum Beispiel als Luftführungskanäle wirken.

Der Aufbohrsteg und der Profiliersteg können - mit Ausnahme der Profilierkontur sowie der unterschiedlichen Steghöhen - baugleich ausgeführt sein. Vor diesem Hintergrund kann im Hinblick auf die Geometrie des Aufbohrstegs Bezug auf die obige Beschreibung des Profilierstegs genommen werden.

Die Erfindung und ihre vorteilhaften Aus- und Weiterbildungen sowie deren Vorteile werden nachfolgend anhand von Zeichnungen näher erläutert.

Es zeigen:
- Fig. 1: in einer vergrößerten perspektivischen Darstellung den Bereich an der Werkzeugspitze eines Aufrauwerkzeuges gemäß dem ersten Ausführungsbeispiel;
- Fig. 2: eine Draufsicht entlang der Werkzeugachse auf die Werkzeugspitze des Aufrauwerkzeuges;
- Fig. 3: eine Ansicht, die den Vorbearbeitungsschritt zeigt, bei dem das Werkzeug unter Bildung der Profiliernut in die Vorbohrung eingefahren wird;
- Fig. 4: in einer Teilansicht eine Abwicklung der Kernbohrungs-Innenwandung nach erfolgtem Endbearbeitungsschritt;
- Fig. 5: in einer stark vergrößerten schematischen Teilschnittdarstellung die in der metallischen Oberfläche der Innenwandung der Kernbohrung eingearbeitete Aufraustruktur;
- Fig. 6: in einer Ansicht entsprechend der Fig. 2 ein Aufrauwerkzeug gemäß dem zweiten Ausführungsbeispiel.

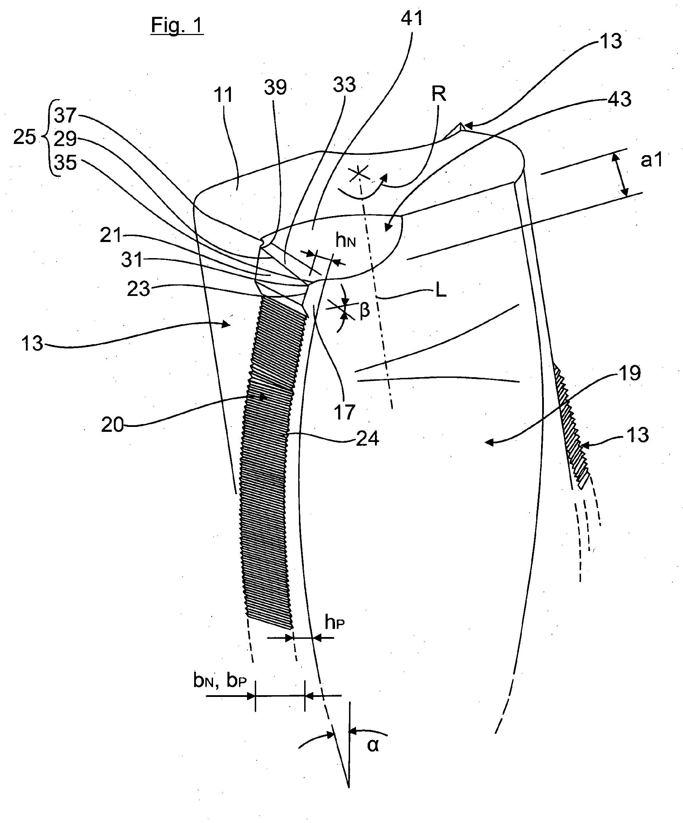

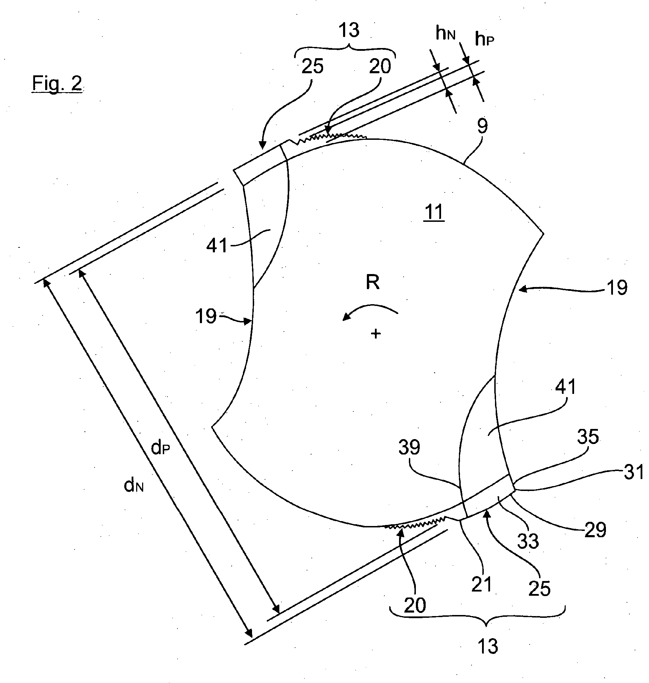

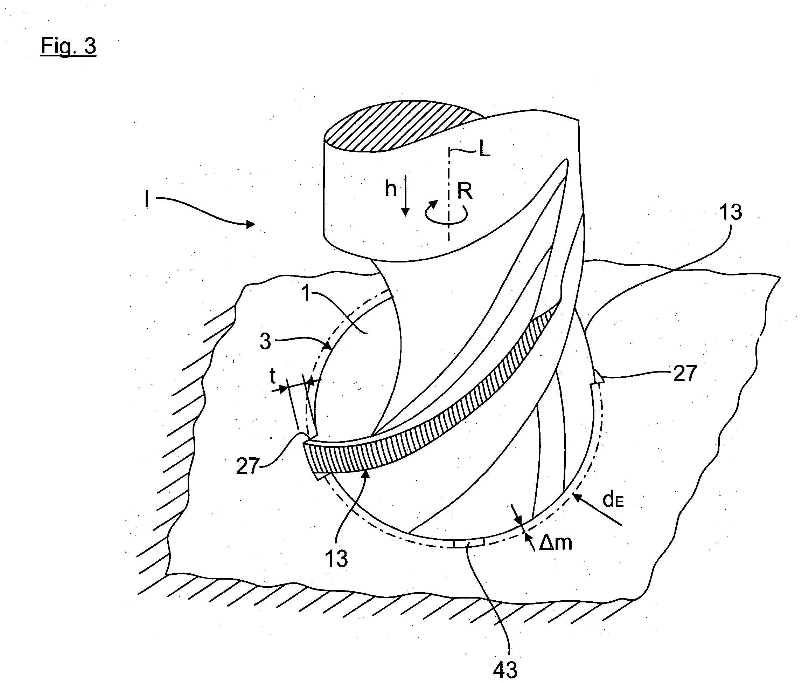

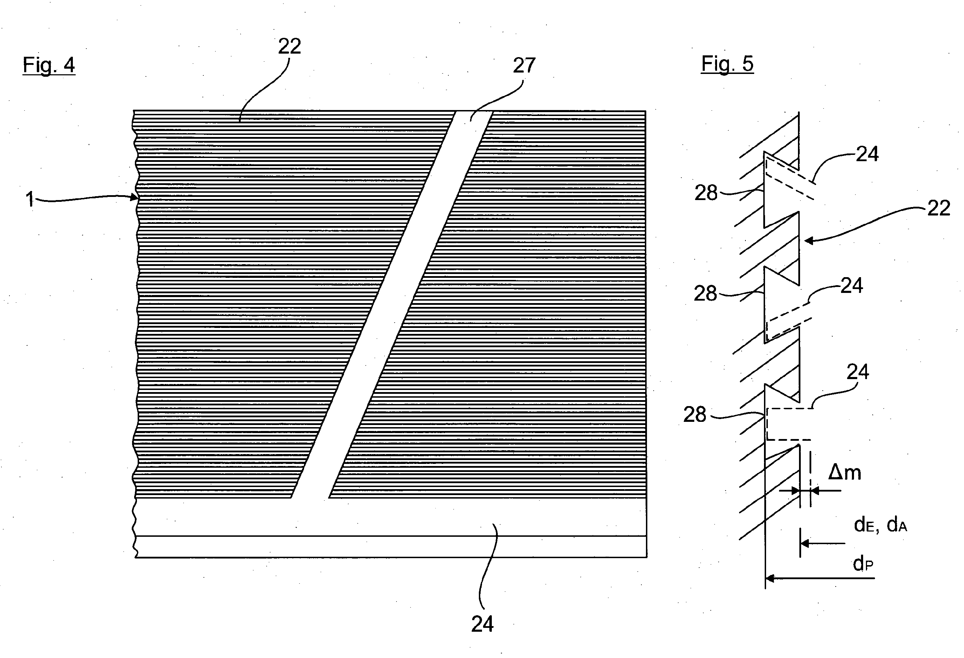

In der Fig. 1 ist ein Aufrauwerkzeug zum Aufrauen einer in den Fig. 3 gezeigten Innenwandung 1 einer Kernbohrung 3 eines Werkstückes 5 gezeigt. Das Aufrauwerkzeug weist einen nicht dargestellten Spannschaft zum Einspannen in ein nicht dargestelltes Werkzeugfutter sowie einen daran anschließenden Werkzeugkörper 9 (Fig. 2) auf. Zwischen der abgeflachten Werkzeugspitze 11 und dem Spannschaft erstrecken sich beispielhaft zwei, mit Bezug auf eine Werkzeugachse L diametral gegenüberliegende Profilierstege 13, die zueinander punktsymmetrisch ausgeführt sind. Die beiden Profilierstege 13 verlaufen mit einem Drallwinkel a spiralförmig um die Werkzeugachse L. Jeder der Profilierstege 13 weist eine Spanfläche 17, die einem jeweils nutenförmigen Spanraum 19 zugewandt ist, und eine außenumfangsseitige Freifläche 21 auf. Die Spanfläche 17 und die außenumfangsseitige Freifläche 21 des Profilierstegs 13 laufen im Bereich der Werkzeugspitze 11 an einer sich längs der Werkzeugachse L erstreckenden Profilier-Schneidkante 23 zusammen. Mittels der Profilier-Schneidkante 23 wird bei vollständig eingefahrenem Aufrauwerkzeug und bei einer WerkzeugRotation R eine in der Fig. 4 gezeigte umfangsseitige Ringnut 24 in der Innenwandung 1 der vorgebohrten Werkstück-Kernbohrung 3 erzeugt.

Jeder der Profilierstege 13 schließt an der Werkzeugspitze 11 mit einer Nutschneide 25 ab, die quer zur Werkzeugachse L ausgerichtet ist. Mit Hilfe der Nutschneide 25 kann in einem später beschriebenen Vorbearbeitungsschritt I das Aufrauwerkzeug in einem Gewindebohrmodus, das heißt mit einer translatorischen Hubbewegung h (Fig. 3) sowie einer an den Werkzeug-Drallwinkel angepassten Rotation, in die Kernbohrung 3 eingefahren werden. Dadurch ergeben sich die in der Fig. 3 gezeigten, diametral gegenüberliegenden Profilnuten 27, die sich spiralförmig entlang der Kernbohrungsachse erstrecken.

Die Nutschneide 25 weist gemäß der Fig. 2 eine Nutgrund-Schneidkante 29 auf. Diese läuft an einer ersten Schneidenecke 31 mit der Profilier-Schneidkante 23 zusammen. Zudem laufen auch die außenumfangsseitige Freifläche 21 des Profilierstegs 13 und eine stirnseitige Nut-Spanfläche 33 an der Nutgrund-Schneidkante 29 zusammen. Die Nut-Spanfläche 33 ist gemäß der Fig. 1 begrenzt durch die Nutgrund-Schneidkante 29 sowie durch eine erste Nutflanken-Schneidkante 35 und eine zweite Nutflanken-Schneidkante 37. Die erste Nutflanken-Schneidkante 35 geht an der bereits erwähnten Schneidenecke 31 in die Nutgrund-Schneidkante 29 über. Die zweite Nutflanken-Schneidkante 37 geht an einer zweiten Schneidenecke 39 in die Nutgrund-Schneidkante 29 über.

In Abkehr zu den Figuren kann die erste Nutflanken-Schneidkante 35 und die zweite Nutflanken-Schneidkante 37 so von der Nutgrund-Schneidkante 29 abgewinkelt sein, dass jede der Profilnuten 27 eine Schwalbenschwanzform aufweist, bei der die Nut-Seitenwände der jeweiligen Profilnut 27 Hinterschneidungen bilden.

Wie aus der Fig. 1 weiter hervorgeht, schließt sich in einem Längsverlauf weg von der Werkzeugspitze 11 an der Freifläche 21 des Profilierstegs 13 eine Profilierkontur 20 an, mittels der eine in der Fig. 4 beschriebene Aufraustruktur 22 auf der Innenwandung 1 der Kernbohrung erzeugt wird. Die Profilier-Schneidkante 23 geht im weiteren Verlauf in Richtung Spannschaft über in Stoßkanten 24 (Fig. 1) der Profilierkontur 20. Die Stoßkanten 24 der Profilierkontur 20 ragen mit einer Profilhöhe h_{P} vom Werkzeuggrundkörper 9 radial nach außen ab. Die Profilhöhe h_{P} ist dabei kleiner bemessen als die Steghöhe h_{N} an der Nutschneide 25. Demgegenüber ist die Stegbreite im Bereich der Nutschneide 25 sowie im Bereich der Profilkontur 20 identisch. Alternativ kann die Stegbreite im Bereich der Profilkontur 20 kleiner sein als die Stegbreite im Bereich der Nutschneide 25.

Gemäß der Fig. 1 ist die Nutgrund-Schneidkante 29 mit Bezug auf eine zur Werkzeugachse L rechtwinklige Ebene mit einem Anstellwinkel β schräggestellt. Der Anstellwinkel β liegt bei etwa 45° und ist so gewählt, dass in der Rotationsrichtung R betrachtet die vorauseilende erste Schneidenecke 31 um einen Längsversatz a₁ von der Werkzeugspitze 11 beabstandet ist. Demgegenüber ist die zweite nacheilende Schneidenecke 39 in der Fig. 1 flächenbündig (das heißt ohne Längenversatz) mit der Werkzeugspitze 11 ausgerichtet.

Die oben erwähnte Nut-Spanfläche 33 der Nutschneide 25 ist radial nach innen mit einer Spanleitfläche 41 verlängert. Mittels der Spanleitfläche 41 wird der beim Nutschneiden entstehende Nutspan in den längs der Werkzeugachse L verlaufenden Spanraum 19 gedrückt. Wie aus den Figuren hervorgeht, ist die Spanleitfläche 41 durch eine Eckausnehmung 43 am Übergang zwischen der Werkzeugspitze und dem Spanraum 19 gebildet. Die Spanabfuhr, die Schmierung und/oder die Kühlung wird durch den Einsatz zum Beispiel eines Kühl-/Schmiermittels unterstützt, dass mit hohem Druck aus Kühlmittelauslässen (nicht dargestellt) in die Werkzeugspitze sowie in Spanräume 19 geführt ist, um die Späne aus der Kernbohrung 3 herauszufördern.

Anhand der Fig. 3 ist das Verfahren zum Aufrauen der Kernbohrungs-Innenwandung 1 veranschaulicht. Demzufolge wird in einem ersten Vorbearbeitungsschritt I zunächst in einem Gewindebohrmodus, das heißt mit geringer Drehzahl sowie mit daran angepasster axialer Hubbewegung h das Aufrauwerkzeug in die vorgebohrte Werkstück-Kernbohrung 3 eingeführt. Dadurch werden die einander gegenüberliegenden spiralförmigen Profiliernuten 27 gebildet. Die Nuttiefe t der beiden Nuten 27 ist dabei aufgrund der Profiliersteg-Geometrie so ausgelegt, dass deren Nutgrund radial außerhalb der Profilierkontur 20 liegt.

Auf diese Weise wird im Vorbearbeitungsschritt I die Profilierkontur 20 ohne mechanische Beanspruchung in die Profiliernuten 27 eingefahren. Nach erfolgter Ausbildung der beiden Profiliernuten 27 verbleibt das Bohrwerkzeug in seinen eingefahrenen Zustand, in dem die beiden Profilierstege 13 in Nuteingriff mit den beiden Profiliernuten 27 sind.

Im nachfolgenden Endbearbeitungsschritt II wird dann das Aufrauwerkzeug mit zumindest einer halben Umdrehung (das heißt zumindest mit einem Drehwinkel von 180°) beaufschlagt, wobei je nach Auslegung der Profilierkontur 20 eine spanende oder spanfreie Umformung der metallischen Oberfläche der Kernbohrungs-Innenwandung 1 erfolgt. Anschließend wird das Aufrauwerkzeug zur Entnahme aus der Kernbohrung 1 wieder im umgekehrten Gewindebohrmodus betrieben, das heißt mit nunmehr entgegengesetzter Drehrichtung, um wieder aus der Kernbohrung 1 herausgefahren werden zu können.

Wie aus der Fig. 2 hervorgeht, ist der Hüllkurvendurchmesser d_{N} des Werkzeugs im Bereich der Nutschneide 25 größer als der Hüllkurvendurchmesser d_{P} im Bereich der Profilkontur 20. Entsprechend ergibt sich nach dem Aufrauprozess die in der Fig. 4 gezeigte Aufraustruktur 22 an der Innenwandung 1 der Kernbohrung 3, wonach die beiden Profiliernuten 27 in Schrägstellung sich mit einer Nuttiefe entlang der Kernbohrungsachse erstrecken. Die Aufraustruktur 22 erstreckt sich demgegenüber rechtwinklig zur Kernbohrungsachse. Im unteren Bereich der Abwicklung ist die umlaufende Ringnut 24 ausgebildet, die sich aufgrund der Rotation der Nutschneide 25 im Endbearbeitungsschritt II ergibt. Die Aufraustruktur 22 weist gemäß der Fig. 5 beispielhaft geradlinig verlaufende Formtaschen 28 auf, die im Querschnitt eine Schwalbenschwanzform haben. Zur Bildung einer solchen Schwalbenschwanzform können die Stoßkanten 24 der Profilierkontur 20 die in der Fig. 5 gestrichelt angedeuteten Geometrien aufweisen.

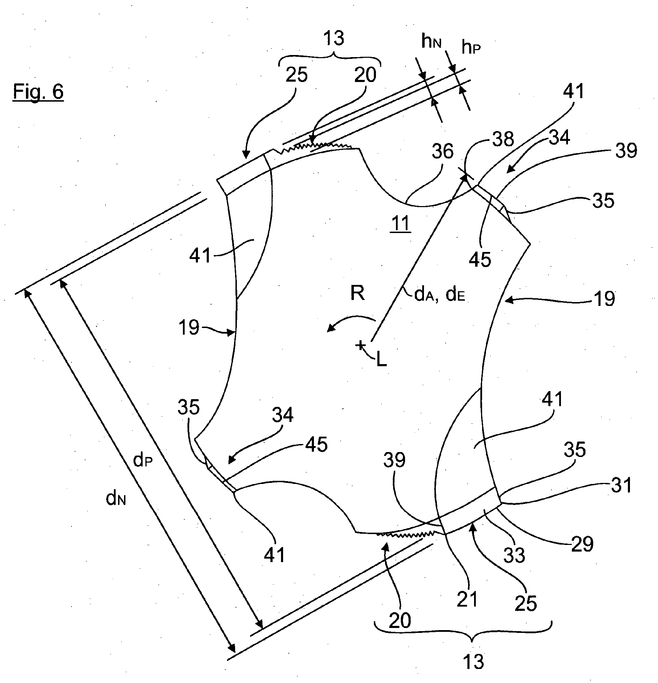

In der Fig. 6 ist ein Aufrauwerkzeug gemäß einem zweiten Ausführungsbeispiel beschrieben, dass ebenfalls zwei mit Bezug auf die Werkzeugachse L diametral gegenüberliegende Profilierstege 13 aufweist. Zusätzlich dazu sind umfangsseitig versetzte Aufbohr-Schneiden 34 vorgesehen, die vom Werkzeuggrundkörper 11 radial abragen. Die beiden Aufbohrschneiden 34 sind zusammen mit den Profilierstegen 13 mit gleichen Winkelabständen umfangsverteilt am Außenumfang des Werkzeuggrundkörpers 9 angeordnet. Jede der Aufbohrschneiden 34 weist einen, einem nutenförmigen Spanraum 36 zugewandte Spanfläche 38 auf sowie eine am Stegrücken angeordnete äußere Freifläche 39. Die Spanfläche 38 sowie die Freifläche 39 laufen an einer sich längs der Werkzeugachse L erstreckenden Aufbohr-Schneidkante 41 zusammen. Zudem sind die Profilierstege 13 und die Aufbohrstege 35 jeweils mit gleicher Steigung am Werkzeug ausgebildet.

Mittels der Aufbohr-Schneidkante kann durch Rotation des Aufbohrwerkzeuges (das heißt im Endbearbeitungsschritt II) die Kernbohrung 3 bis auf einen Enddurchmesser d_{E} (Fig. 3 und 6) aufgebohrt werden.

Wie in der Fig. 3 angedeutet ist, werden beim Vorbearbeitungsschritt I nicht nur die Profilnuten 27, sondern auch die Aufbohrnuten 43 (eine ist in der Fig. 3 gestrichelt angedeutet) in der Kernbohrungs-Innenwandung 1 erzeugt. Im nachfolgenden Endbearbeitungsschritt II erfolgt dann zusätzlich ein Aufbohrvorgang, bei dem die Aufbohrschneide 34 unter Werkzeugrotation die Kernbohrung bis auf den Enddurchmesser d_{E} aufbohrt.

## Patentansprüche

1. Aufrauwerkzeug zum Aufrauen einer metallischen Oberfläche einer Innenwandung (1) einer vorgebohrten Werkstückbohrung (3), zwischen dessen Spannschaft und dessen Werkzeugspitze (11) eine Profilierkontur (20) ausgebildet ist, mit der bei einer Werkzeugrotation (R) unter spanender oder spanfreier Umformung der metallischen Oberfläche eine Aufraustruktur (22) erzeugbar ist, wobei das Aufrauwerkzeug zumindest einen sich entlang der Werkzeugachse (L) erstreckenden, von einem Werkzeuggrundkörper (9) abragenden Profiliersteg (13) aufweist, an dessen äußeren Stegrücken die Profilierkontur (20) ausgebildet ist, und **dadurch gekennzeichnet, dass** der Profiliersteg (13) an der Werkzeugspitze (11) mit einer zur Werkzeugachse (L) quer ausgerichteten Nutschneide (25) abschließt, mit der vor der Durchführung der durch die Werkzeugrotation (R) erfolgenden Umformung das Aufrauwerkzeug in einer axialen Hubbewegung (h) in die Kernbohrung (3) einfahrbar ist, und zwar unter Bildung einer entlang der Kernbohrungs-Längsachse verlaufenden Profiliernut (27), mit der der Profiliersteg (13) in Nuteingriff bringbar ist.

2. Aufrauwerkzeug nach Anspruch 1, **dadurch gekennzeichnet, dass** der Werkzeug-Durchmesser (d_{N}) an der Nutschneide (25) größer ist als der Werkzeug-Durchmesser (d_{P}) an der Profilierkontur (20) oder dass der Werkzeug-Durchmesser (d_{N}) an der Nutschneide (25) gleich dem Werkzeug-Durchmesser (d_{P}) an der Profilierkontur (20) ist.

3. Aufrauwerkzeug nach Anspruch 1 oder 2, **dadurch gekennzeichnet, dass** die Nutschneide (25) eine Nutgrund-Schneidkante (29) aufweist, die an einer ersten Schneidenecke (31) mit einer entlang der Werkzeugachse (L) verlaufenden Profilier-Schneidkante (23) zusammenläuft.

4. Aufrauwerkzeug nach Anspruch 1, 2 oder 3, **dadurch gekennzeichnet, dass** eine erste Nutflanken-Schneidkante (35) und eine zweite Nutflanken-Schneidkante (37) der Nutschneide (25) so von der Nutgrund-Schneidkante (29) abgewinkelt ist, dass die im Werkstück gebildete Profilnut (27) eine Schwalbenschwanzform aufweist, bei der die Nut-Seitenwände der Profilnut (27) Hinterschnitte bilden.

5. Aufrauwerkzeug nach einem der vorhergehenden Ansprüche, **dadurch gekennzeichnet, dass** der Profiliersteg (13) zumindest im Bereich der Werkzeugspitze (11) eine, einen nutenförmigen Spanraum (19) zugewandte Spanfläche (17) und/oder eine Freifläche (21) am Stegrücken auf, die bevorzugt an der Profilier-Schneidkante (23) zusammenlaufen.

6. Aufrauwerkzeug nach Anspruch 5, **dadurch gekennzeichnet, dass** die Stegrücken-Freifläche (21) und eine stirnseitig an der Werkzeugspitze (11) ausgebildete Nut-Spanfläche (33) an der Nutgrund-Schneidkante (29) zusammenlaufen.

7. Aufrauwerkzeug nach Anspruch 6, **dadurch gekennzeichnet, dass** die an der Werkzeugspitze (11) ausgebildete Nut-Spanfläche (33) begrenzt ist durch die Nutgrund-Schneidkante (29) sowie durch eine erste und eine zweite Nutflanken-Schneidkante (35, 37), die jeweils an der ersten Schneidenecke (31) und an der zweiten Schneidenecke (39) in die Nutgrund-Schneidkante (29) übergehen.

8. Aufrauwerkzeug nach einem der vorhergehenden Ansprüche, **dadurch gekennzeichnet, dass** der Profiliersteg (13) mit einem Drallwinkel (a) spiralförmig um die Werkzeugachse (L) verläuft, und dass insbesondere die Profiliernut (27) mit der axialen Hubbewegung (h) und einer dem Drallwinkel (a) angepassten Rotationsbewegung (R) des Aufrauwerkzeugs spiralförmig in der Innenwandung (1) der Kernbohrung (3) ausbildbar ist.

9. Aufrauwerkzeug nach einem der Ansprüche 6 bis 8, **dadurch gekennzeichnet, dass** die Nut-Spanfläche (33) der Nutschneide (25) radial nach innen mit einer stirnseitigen Spanleitfläche (41) verlängert ist, mittels der der beim Nutschneiden entstehende Nutspan in den längs der Werkzeugachse (L) verlaufenden Spanraum (19) gedrückt wird.

10. Aufrauwerkzeug nach einem der vorhergehenden Ansprüche, **dadurch gekennzeichnet, dass** zusätzlich zum Profiliersteg (13) zumindest eine, sich entlang der Werkzeugachse (L) erstreckende Aufbohr-Schneide (34) vom Werkzeug-Grundkörper (9) radial abragt, und dass insbesondere die Aufbohr-Schneide (34) einen Aufbohrsteg (35) mit einer, einen nutenförmigen Spanraum (36) zugewandten Spanfläche (38) und einer äußeren Freifläche (39) aufweist, die an einer längs der Werkzeugachse (L) verlaufenden Aufbohr-Schneidkante (41) zusammenlaufen, mit der durch Rotation (R) des Aufrauwerkzeugs die Kernbohrung (3) bis auf einen Enddurchmesser aufgebohrt wird.

11. Aufrauwerkzeug nach Anspruch 10, **dadurch gekennzeichnet, dass** der Aufbohrsteg (35) an der Werkzeugspitze (11) mit einer Nutschneide (45) abschließt, mit der vor dem Aufbohrvorgang bei der axialen Hubbewegung (h) eine Aufbohrnut (43) in der Innenwandung (1) der Kernbohrung (3) erzeugbar ist, mit der die Aufbohrschneide (34) in Nuteingriff ist, und dass insbesondere der Profiliersteg (13) und der Aufbohrsteg (35) mit gleicher Steigung am Werkzeug ausgebildet sind.

12. Aufrauwerkzeug nach Anspruch 10 oder 11, **dadurch gekennzeichnet, dass** der Rückendurchmesser (d_{A}) des Aufbohrstegs (35) größer als der Kernbohrungsdurchmesser und kleiner als der Profilierkonturdurchmesser (d_{P}) ist.

13. Verfahren zum Aufrauen einer metallischen Oberfläche mit einem Aufrauwerkzeug nach einem der vorhergehenden Ansprüche, bei dem in einem Vorbearbeitungsschritt (I) eine längs der Kernbohrungsachse verlaufende Profiliernut (27) in der Kernbohrungs-Innenwandung (1) ausgebildet wird, und in einem Endbearbeitungsschritt (II) der in der Profiliernut (27) angeordnete Profiliersteg (13) des Aufrauwerkzeugs unter Rotation (R) die Umformung der metallischen Oberfläche vornimmt.

14. Verfahren nach Anspruch 13, **dadurch gekennzeichnet, dass** im Vorbearbeitungsschritt (I) mittels der Nutschneide (45) am Aufbohrsteg (35) des Aufrauwerkzeugs eine längs der Kernbohrungsachse verlaufende Aufbohrnut (43) an der Kernbohrungs-Innenwandung (1) ausgebildet wird, und im Endbearbeitungsschritt (II) die Aufbohrschneide (34) des Aufbohrstegs (35) unter Werkzeugrotation (R) die Kernbohrung (3) bis auf den Enddurchmesser aufbohrt.

## Claims

1. Tool for roughening a metallic surface of an inner wall (1) of a pre-bored workpiece bore (3), a profiling contour (20) being formed between its clamping shaft and tool tip (11), by means of which profiling contour upon the rotation of the tool (R) a roughened structure (22) can be formed by shaping the metallic surface by cutting or not cutting, wherein the roughening tool comprises at least one profiling web (13) extending along the tool axis (L) and projecting from a main tool body (9), the profiling contour (20) being formed on the outer rear web of the profiling web, and **characterised in that**
the profiling web (13) ends at the tool tip (11) with a groove cutting edge (25) oriented perpendicular to the tool axis (L), by means of which before performing the shaping by means of tool rotation (R) the roughening tool can be moved in an axial lifting movement (h) into the core bore (3), and by forming a profiling groove (27) running along the core bore longitudinal axis by means of which the profiling web (13) can be brought into engagement with the groove.

2. Roughening tool according to claim 1, **characterised in that** the tool diameter (d_{N}) at the groove cutting edge (25) is greater than the tool diameter (d_{P}) at the profiling contour (20) or **in that** the tool diameter (d_{N}) at the groove cutting edge (25) is equal to the tool diameter (dp) at the profiling contour (20).

3. Roughening tool according to claim 1 or 2, **characterised in that** the groove cutting edge (25) has a groove base cutting edge (29), which at a first cutting edge corner (31) converges with a profiling cutting edge (23) running along the tool axis (L).

4. Roughening tool according to claim 1, 2 or 3, **characterised in that** a first groove flank cutting edge (35) and a second groove flank cutting edge (37) of the groove cutting edge (25) is angled from the groove base cutting edge (29) so that the profile groove (27) formed in the workpiece has a dovetail shape, in which the groove side walls of the profile groove (27) form undercuts.

5. Roughening tool according to any of the preceding claims, **characterised in that** the profiling web (13) at least in the region of the tool tip (11) has a cutting face (17) facing a groove-shaped cutting space (19) and/or a free face (21) on the web rear, which preferably converge at the profiling cutting edge (23).

6. Roughening tool according to claim 5, **characterised in that** the web rear free face (21) and a groove cutting face (33) formed on the end face of the tool tip (11) converge at the groove base cutting edge (29).

7. Roughening tool according to claim 6, **characterised in that** the groove cutting face (33) formed at the tool tip (11) is delimited by the groove base cutting edge (29) and by a first and a second groove flank cutting edge (35, 37), which merge respectively at the first cutting edge corner (31) and at the second cutting edge corner (39) into the groove base cutting edge (29).

8. Roughening tool according to any of the preceding claims, **characterised in that** the profiling web (13) runs with a twisting angle (α) in a spiral around the tool axis (L), and **in that** in particular the profiling groove (27) can be formed by the axial lifting movement (h) and a rotational movement (R) of the roughening tool adjusted to the twisting angle (a) in a spiral form in the inner wall (1) of the core bore (3).

9. Roughening tool according to any of claims 6 to 8, **characterised in that** the groove cutting face (33) of the groove cutting edge (25) is extended radially inwardly by an end cutting lead face (41), by means of which the groove cut formed during the groove cutting is pushed into the cutting space (19) running along the tool axis (L).

10. Roughening tool according to any of the preceding claims, **characterised in that** in addition to the profiling web (13) at least one bore cutting edge (34) extending along the tool axis (L) projects radially from the main tool body (9), and **in that** in particular the bore cutting edge (34) comprises a boring web (35) with a cutting face (38) facing a groove-like cutting space (36) and an outer free face (39), which converge at a bore cutting edge (41) running along the tool axis (L), by means of which by rotation (R) of the roughening tool the core bore (3) is bored up to an end diameter.

11. Roughening tool according to claim 10, **characterised in that** the boring web (35) ends at the tool tip (11) with a groove cutting edge (45), by means of which before the boring process during the axial lifting movement (h) a boring groove (43) can be produced in the inner wall (1) of the core bore (3), with which the bore cutting edge (34) is in groove engagement and **in that** in particular the profiling web (13) and the boring web (35) are designed to have the same gradient on the tool.

12. Roughening tool according to claim 10 or 11, **characterised in that** the rear diameter (d_{A}) of the boring web (35) is greater than the core bore diameter and smaller than the profiling contour diameter (dp).

13. Method for roughening a metallic surface by means of a roughening tool according to any of the preceding claims, in which in a pre-processing step (I) a profiling groove (27) running along the core bore axis is formed in the core bore inner wall (1), and in a final processing step (II) the profiling web (13) of the roughening tool arranged in the profiling groove (27) performs by rotation (R) the shaping of the metal surface.

14. Method according to claim 13, **characterised in that** in the pre-processing step (I) by means of the groove cutting edge (45) on the boring web (35) of the roughening tool a boring groove (43) running along the core bore axis is formed on the core bore inner wall (1), and in the final processing step (II) the bore cutting edge (34) of the boring web (35) by means of tool rotation (R) bores the core bore (3) up to the end diameter.

## Revendications

1. Outil de grenage permettant de grener une surface métallique d'une paroi interne (1) d'un alésage de pièce préforé (3), entre laquelle tige de serrage et laquelle pointe d'outil (11) est formé un contour de profilage (20), par lequel, lors d'une rotation (R) de l'outil, par façonnage avec ou sans copeau de la surface métallique, on peut produire une structure rugueuse (22), dans lequel l'outil de grenage présente au moins une barrette de profilage (13) s'étendant le long de l'axe (L) de l'outil et dépassant d'un corps de base (9) de l'outil, sur lesquelles crêtes de barrette externes est formé le contour de profilage (20), et **caractérisé en ce que** :
la barrette de profilage (13) se termine à la pointe (11) de l'outil par un tranchant de rainure (25) orienté transversalement à l'axe (L) de l'outil, avec lequel, avant la réalisation du façonnage qui se produit par rotation (R) de l'outil, l'outil de grenage peut être introduit par un mouvement de levage axial (h) dans l'alésage central (3) et ce, en formant une rainure de profilage (27) s'étendant le long de l'axe longitudinal de l'alésage central, avec laquelle la barrette de profilage (13) peut être amenée en prise.

2. Outil de grenage selon la revendication 1, **caractérisé en ce que** le diamètre (d_{N}) de l'outil sur le tranchant de rainure (25) est plus grand que le diamètre (dp) de l'outil sur le contour de profilage (20) ou le diamètre (d_{N}) de l'outil sur le tranchant de rainure (25) est égal au diamètre (dp) de l'outil sur le contour de profilage (20).

3. Outil de grenage selon la revendication 1 ou 2, **caractérisé en ce que** le tranchant de rainure (25) présente une arête de coupe de base de rainure (29) qui converge, à une première pointe de tranchant (31), avec une arête de coupe de profilage (23) s'étendant le long de l'axe (L) de l'outil.

4. Outil de grenage selon la revendication 1, 2 ou 3, **caractérisé en ce qu'**une première arête de coupe de flanc de rainure (35) et une seconde arête de coupe de flanc de rainure (37) du tranchant de rainure (25) sont repliées par l'arête de coupe de base de rainure (29) en sorte que la rainure profilée (27) formée dans la pièce présente une forme en queue d'aronde dans laquelle les parois latérales de la rainure profilée (27) forment des contre-dépouilles.

5. Outil de grenage selon l'une quelconque des revendications précédentes, **caractérisé en ce que** la barrette de profilage (13) présente au moins dans la zone de la pointe d'outil (11) une face de coupe (17) tournée vers le logement de copeaux en forme de rainure (19) et/ou une face libre (21) sur les crêtes de barrette, qui convergent de préférence sur l'arête de coupe de profilage (23).

6. Outil de grenage selon la revendication 5, **caractérisé en ce que** la face libre (21) des crêtes de barrette et une face de coupe de rainure (33) formée côté avant à la pointe (11) de l'outil convergent sur l'arête de coupe de base de rainure (29).

7. Outil de grenage selon la revendication 6, **caractérisé en ce que** la face de coupe de rainure (33) formée à la pointe (11) de l'outil est délimitée par l'arête de coupe de base de rainure (29) ainsi que par une première et une seconde arête de coupe de flancs de rainure (35, 37), qui se fondent respectivement sur la première pointe de tranchant (31) et la seconde pointe de tranchant (39) dans l'arête de coupe de base de rainure (29).

8. Outil de grenage selon l'une quelconque des revendications précédentes, **caractérisé en ce que** la barrette de profilage (13) s'étend en forme spiralée selon un angle de torsion (a) autour de l'axe (L) de l'outil et, en particulier, la rainure de profilage (27) peut être formée en spirale dans la paroi interne (1) de l'alésage central (3) avec le mouvement de levage axial (h) et un mouvement de rotation (R) de l'outil de grenage adapté à l'angle de torsion (α).

9. Outil de grenage selon l'une quelconque des revendications 6 à 8, **caractérisé en ce que** la face de coupe de rainure (33) du taillant de rainure (25) est prolongée radialement vers l'intérieur par une face guide-copeaux côté avant (41) au moyen de laquelle le copeau de rainure formé lors de la coupe de la rainure est pressé dans le logement à copeaux (19) s'étendant le long de l'axe (L) de l'outil.

10. Outil de grenage selon l'une quelconque des revendications précédentes, **caractérisé en ce que,** en plus de la barrette de profilage (13), au moins un tranchant d'alésage (34) s'étendant le long de l'axe (L) de l'outil fait saillie radialement du corps de base (9) de l'outil et, en particulier, le tranchant d'alésage (34) présente une barrette d'alésage (35) avec une face de coupe (38) tournée vers un logement à copeaux en forme de rainure (36) et une face libre externe (39), qui convergent sur une arête d'alésage (41) s'étendant le long de l'axe (L) de l'outil, avec laquelle, par rotation (R) de l'outil de grenage, l'alésage central (3) est alésé jusqu'à un diamètre final.

11. Outil de grenage selon la revendication 10, **caractérisé en ce que** la barrette d'alésage (35) se termine à la pointe (11) de l'outil par un tranchant de rainure (45) avec lequel, avant l'opération d'alésage, lors du mouvement de levage axial (h), une rainure d'alésage (43) peut être produite dans la paroi interne (1) de l'alésage central (3), avec laquelle le tranchant d'alésage (34) est en prise, et, en particulier, la barrette de profilage (13) et la barrette d'alésage (35) sont formées avec la même pente sur l'outil.

12. Outil de grenage selon la revendication 10 ou 11, **caractérisé en ce que** le diamètre des crêtes (d_{A}) de la barrette d'alésage (35) est plus grand que le diamètre de l'alésage central et plus petit que le diamètre de contour de profilage (d_{P}).

13. Procédé permettant de grener une surface métallique avec un outil de grenage selon l'une quelconque des revendications précédentes, dans lequel, dans une étape de prétraitement (I), une rainure de profilage (27) s'étendant le long de l'axe de l'alésage central est formée dans la paroi interne (1) de l'alésage central et, dans une étape de traitement finale (II), la barrette de profilage (13) de l'outil de grenage agencée dans la rainure de profilage (27) effectue, par rotation (R), le façonnage de la surface métallique.

14. Procédé selon la revendication 13, **caractérisé en ce que,** dans l'étape de prétraitement (I), au moyen du tranchant de rainure (45) sur la barrette d'alésage (35) de l'outil de grenage, on forme une rainure d'alésage (43) s'étendant le long de l'axe de l'alésage central sur la paroi interne (1) de l'alésage central et, dans l'étape de traitement finale (II), le tranchant d'alésage (34) de la barrette d'alésage (35) fore l'alésage central (3) jusqu'au diamètre final par rotation (R) de l'outil.
